# EUROPÄISCHE PATENTSCHRIFT

(11) **EP 1 602 429 B1**
(45) Veröffentlichungstag und Bekanntmachung des Hinweises auf die Patenterteilung: **25.02.2009**
(21) Anmeldenummer: 05011110.3
(22) Anmeldetag: 23.05.2005
(51) Int. Cl.: B23C 1/20, B23C 5/08, B24D 5/00, B24B 23/02

(54) **Vorrichtung und Verfahren zum Auftrennen von Schweissnähten**
Device and Method of separating welded joints
Dispositif et procédé pour la séparation de joints soudés

(30) Priorität: 02.06.2004 DE 102004027032
(43) Veröffentlichungstag der Anmeldung: 07.12.2005
(73) Patentinhaber: MV Marketing + Vertriebs-GmbH & Co. KG Wieländer + Schill, 78054 Villingen-Schwenningen (DE)
(72) Erfinder: Harwath-Seyfried, Wolfgang, 78056 Villingen Schwenningen (DE)
(74) Vertreter: Herden, Andreas F.

(56) Entgegenhaltungen:
- EP-A1- 0 911 116
- WO-A-98/40190
- WO-A1-20/05107985
- DE-U- 1 886 766
- US-A- 3 191 500
- US-A- 5 996 659
- US-A- 6 048 142
- US-A1- 2003 216 116
- US-B1- 6 561 063
- US-B1- 6 561 063
- US-B1- 6 699 114
- US-B1- 6 699 114

## Beschreibung

Die Erfindung betrifft eine Vorrichtung und ein Verfahren zum Auftrennen von Schweißnähten, insbesondere an Fahrzeugkarosserien.

Aus Blech hergestellte Fahrzeugkarosserien wurden in der Vergangenheit meist durch Punktschweißverbindungen zusammengefügt. Falls bei einer Reparatur einzelne Bleche ausgetauscht werden müssen, können solche Punktverbindungen mit Bohr- und Fräswerkzeugen gelöst werden.

Bei modernen Fahrzeugkarosserien kommen zur Erreichung höherer Karosseriesteifigkeiten immer häufiger Schweißnähte zum Einsatz. Besonders bei modernen Stahl- und Aluminiumkarosserien werden neben Klebeverbindungen Laserschweißverfahren angewendet. Diese Laserverbindungen weisen eine sehr hohe Festigkeit auf und können zudem bei vertretbarem Aufwand automatisiert werden.

Problematisch ist allerdings das Auftrennen von Schweißnähten. Müssen im Reparaturfall einzelne Bleche ausgetauscht werden, werden Schweißnähte zumeist mit einem Winkelschleifer getrennt. Es hat sich in der Praxis gezeigt, dass die exakte Führung eines solchen Werkzeugs schwierig ist. Insbesondere kann bei bekannten Winkelschleifern die Schnitttiefe nur unzureichend reguliert werden. Dies hat zur Folge, dass nicht nur das auszutauschende Blech, sondern meist auch darunter liegende Blech beschädigt wird.

Die WO 2005/107985 A1, die als Stand der Technik gemäß Artikel 54(3) EPÜ gilt und den nächstliegenden Stand der Technik bezüglich den unabhängigen Ansprüchen 1 und 22 bildet, zeigt ein Fräswerkzeug mit einem Fräser zum Auftrennen von Laserschweißnähten an Karosserieblechen mit einem Haltegriff, wobei der Fräser mit einem Dorn in einer Aufnahme befestigbar ist. Das Fräswerkzeug der WO 2005/107985 A1 liegt mit einer Fußplatte auf der Karosserie auf. Die WO2005/107985 offenbart ebenfalls ein durch das Fräswerkzeug durchgeführtes Verfahren zum Auftrennen von Laserschweißnähten an Karosserieblechen. Die US 6,048,142 zeigt ein stationäres Werkzeug, welches einen Fräser und ein als Abstandshalter ausgebildes Kugellager umfasst und welches zum Fräsen von Fasen an einem Schaft ausgebildet ist.

Der Erfindung liegt die Aufgabe zugrunde, ein Werkzeug und ein Verfahren bereitzustellen, mit dem sich Schweißnähte, insbesondere Laserschweißnähte leicht auftrennen lassen. Weiter es ist Aufgabe der Erfindung, dass das unten liegende Blech beim Auftrennen der Schweißnaht nicht zerstört wird. Zudem soll das erfindungsgemäße Werkzeug leicht zu handhaben und kostengünstig herzustellen sein.

Die Aufgabe der Erfindung wird gelöst durch ein Werkzeug nach einem der unabhängigen Ansprüche sowie durch ein Verfahren zum Auftrennen von Schweißnähten.

Vorteilhafte Ausführungsformen und Weiterbildungen der Erfindung sind den jeweiligen Unteransprüchen zu entnehmen.

Gemäß der Erfindung ist ein materialabtragendes Werkzeug, insbesondere ein Fräser zum Auftrennen von Schweißnähten vorgesehen. Insbesondere eine Verwendung zum Auftrennen von Laserschweißnähten an Karosserieblechen ist Gegenstand der Erfindung. Der Fräser umfasst ein vorteilhafterweise im wesentliches kreiszylinderförmiges Schneidrad, das gemäß einer Ausführungsform zumindest umfangseitig Schneiden aufweist. Zumindest auf einer Seite des Schneidrads ist eine Distanzscheibe bevorzugt achsensymetrisch angeordnet, die einen kleineren Radius als der materialabtragenden Teil, insbesondere als der Außendurchmesser des Schneidrads aufweist.

Die Schweißnaht wird also insbesondere mit einem Umfangsfräser aufgetrennt. Es hat sich herausgestellt, dass insbesondere Laserschweißnähte sich durch einen solchen Umfangsfräser wesentlich sauberer trennen lassen, als durch eine Schleifscheibe. Eine achsensymetrisch angeordnete Distanzscheibe verhindert dabei, dass das Werkzeug tiefer als beabsichtigt in die Karosserie eindringt. So ist es möglich, die Schweißnaht im Wesentlichen nur bis auf die Dicke des oberen Bleches wegzufräsen. Dadurch bleibt das untere Blech erhalten und braucht weder nachbearbeitet noch ersetzt zu werden.

Nach einer vorteilhaften Ausführungsform der Erfindung ist auf beiden Seiten des Schneidrads zumindest eine Distanzscheibe angeordnet. So ist sichergestellt, dass das Werkzeug auch nicht durch eine Schrägstellung beim Fräsen auf einer Seite mehr Material abgeträgt. Es wird sogar im Wesentlichen verhindert, dass es zu einer Schrägstellung des Werkzeugs kommt.

Bei einer Weiterbildung der Erfindung sind Schneidrad oder Distanzscheiben austauschbar. So ist es möglich, das Werkzeug auf verschiedene Schnitttiefen einzustellen. Beispielsweise können durch Austausch der Distanzscheiben bei ein und demselben Schneidrad verschiedene Tiefen eingestellt werden. Gleiches kann auch durch Austausch des Schneidrads erreicht werden, vor allem ist aber ein Austausch des Schneidrads bei Verschleiß vorgesehen.

Gemäß der Erfindung weist der Fräser einen Dorn zum Einspannen in eine Werkzeugaufnahme auf. So kann der Fräser beispielsweise auf eine Bohrmaschine montiert werden.

Vorteilhafterweise sind an dem Dorn zum Einspannen in eine Werkzeugaufnahme das Schneidrad und die Distanzscheiben befestigt.

Gemäß der Erfindung ist eine Distanzscheibe mit dem Dorn zum Einspannen in eine Werkzeugaufnahme fest verbunden, insbesondere einstückig ausgebildet. Beispielsweise die hintere Distanzscheibe bildet so mit dem Dorn eine Einheit. Die vordere Distanzscheibe kann dann beispielsweise mit einem Gewinde aufgeschraubt sein und so gleichzeitig das Schneidrad festklemmen. Beide Distanzscheiben drehen sich so mit dem Schneidrad mit. Es hat sich herausgestellt, dass das daraus resultierende Reiben der Distanzscheiben auf dem Blech nicht zu wesentlichen Beschädigungen führt.

Für das Auffräsen von Schweißnähten an Karosserieblechen hat sich bei den Schneiden des Schneidrads ein Spanwinkel zwischen 3 und 15°, bevorzugt zwischen 5 und 10° und besonders bevorzugt zwischen 6 und 8° als vorteilhaft erwiesen. Die Schneiden haben so einen hohen Spanabtrag und neigen nicht zum Ausbrechen.

Zur Reduzierung der Reibung ist es von Vorteil, die Schneiden des Schneidrads hinterschnitten auszugestalten.

Dabei hat sich ein Freiwinkel zwischen 1 und 30°, bevorzugt zwischen 8 und 15 und besonders bevorzugt zwischen 10 und 12° als besonders geeignet heraus gestellt.

Bei einer bevorzugten Ausführungsform der Erfindung weist das Schneidrad einen Außendurchmesser zwischen 10 und 120 mm, bevorzugt zwischen 15 und 70 mm und besonders bevorzugt zwischen 20 und 50 mm auf. Als Zahnanzahl des Schneidrads haben sich 25 bis 60 Zähne, bevorzugt 40 bis 55 Zähne als geeignet herausgestellt. Mit diesen Durchmessern und Zahnanzahlen wird bei Karosserieblechen ein optimales Ergebnis erreicht.

Für ein Karosserieblech weist das Schneidrad eine Breite von 1 bis 10 mm, bevorzugt von 3 bis 6 mm aufweist. So können gängige Laserschweißnähte aufgetrennt werden.

Ein Schneidrad aus Vollhartmetall hat sich zum Fräsen von Karosserieblechen als besonders geeignet herausgestellt.

Bei einer bevorzugten Ausführungsform des Fräsers weisen die Distanzscheiben einen 0,1 bis 3 mm, bevorzugt 0,8 bis 1,2 mm und besonders bevorzugt 1,2 bis 1,7 mm kleineren Radius als das Schneidrad auf. So sind typische Blechdicken im Automobilbereich erfasst.

Gegenstand der Erfindung ist ein Fräswerkwerkzeug mit einem oben beschriebenen Fräser, einem Haltegriff und einer Betätigungseinheit, wobei der Fräser mit einem Dorn in einer Aufnahme befestigbar ist.

Bei einer Weiterbildung der Erfindung weist das Fräswerkzeug im wesentlichen parallel zur Fräserachse einen Schutz gegen umherfliegenden Späne auf. So wird sichergestellt, dass in der Nähe stehende Personen nicht durch umherfliegende Späne verletzt werden.

Vorteilhafterweise erstreckt sich der Schutz im wesentlichen kreisbogenförmig um die Fräserachse und ist aus transparentem Material, beispielsweise aus Plexiglas ausgebildet. So kann der Fräsvorgang optisch überwacht werden.

Bei einer besonderen Ausführungsform des Fräswerkzeug ist die Drehachse der Aufnahme in etwa rechtwinklig zum Haltegriff angeordnet. Dennoch ist es möglich, die Drehachse der Aufnahme schräg zum Haltegriff anzuordnen. Es hat sich herausgestellt, dass mit dieser Werkzeugform besonders zur Karosserie randseitige Schweißnähte gut zugänglich sind, da sich Kopf und Griff des Werkzeugs, in dem sich üblicherweise der Antrieb befindet, beim Fräsen außerhalb des Karosserieumrisses befinden.

Die Erfindung betrifft ferner ein Verfahren zum Auftrennen von Schweißnähten, insbesondere von Laserschweißnähten an Karosserieblechen. Gemäß der Erfindung wird mit einem Umfangsfräser oder einer Schleifscheibe die Schweißnaht bis auf eine Tiefe, die in etwa dem oberen Blech entspricht, weggefräst. So ist gewährleistet, dass nur das obere Blech durch den Fräsvorgang beschädigt wird. Das untere Blech, das typischerweise Teil der tragenden Karosseriestruktur ist, wird so nicht beschädigt und braucht im Reparaturfall weder nachgebessert noch ausgetauscht zu werden.

In vorteilhafter Weise wird die Schweißnaht mit einem Fräser des erfindungsgemäßen Fräswerkzeugs aufgetrennt. Dabei wird zumindest eine Distanzscheibe achensymetrisch zum Fräser oder zur Schleifscheibe angeordnet, die einen Radius hat, der in etwa um die Dicke des oberen zu trennenden Bleches kleiner ist als der materialabtragende Teil des Werkzeugs.

So ist gewährleistet, dass die Schweißnaht nur bis auf die Dicke des oberen Bleches aufgetrennt wird.

Die Erfindung soll im Folgenden anhand eines Ausführungsbeispiels näher erläutert werden.

Fig. 1 zeigt eine schematische perspektivische Ansicht eines Fräsers des erfindungsgemäßen Fräswerkzeugs.

Fig. 2 zeigt eine beispielhafte Darstellung eines erfindungsgemäßen Fräswerkzeugs.

Fig. 3 zeigt eine schematische Skizze eines Schneidrads.

Fig. 4 zeigt eine schematische Skizze einer Schneidradaufnahme.

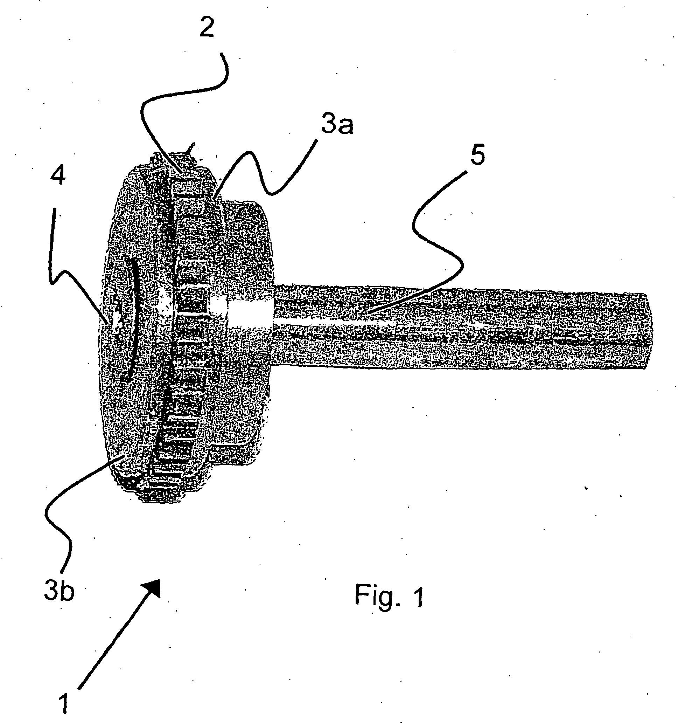

Fig. 1 zeigt einen erfindungsgemäßen Fräser 1. Der Fräser 1 ist zum Auftrennen von Laserschweißnähten an Karosserieblechen ausgebildet. Das Schneidrad 2 hat einen Außendurchmesser von 45 mm und weist 52 Zähne auf. Die Breite des Scheinrads 2 beträgt 4 mm. Neben dem Schneidrad 2 sind beidseitig Distanzscheiben 3a,3b angeordnet. Zum Einspannen in eine Werkzeugaufnahme (nicht zu sehen) verfügt der Fräser 1 über einen kreiszylinderförmigen Dorn 5. Der Dorn 5 und die hintere Distanzscheibe 3a sind einstückig ausgebildet. Das Scheidrad 2 und die vordere Distanzscheibe 3b werden mit einer Schraube 4 an dem aus hinterer Distanzscheibe 3a und Dorn 5 bestehenden Teil befestigt.

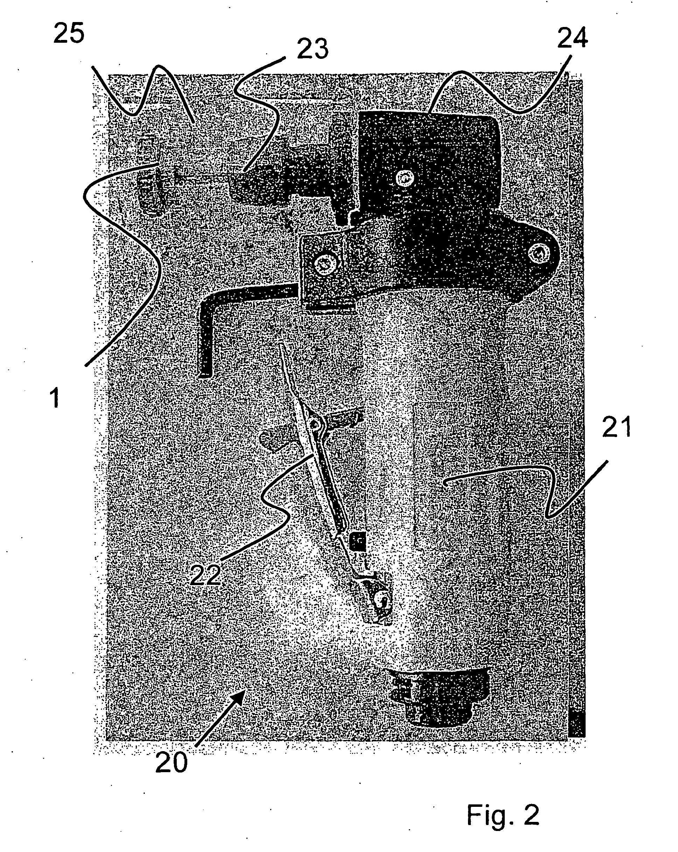

Fig. 2 zeigt ein Ausführungsbeispiel für ein erfindungsgemäßes Fräswerkzeug 20. Das Fräswerkzeug 20 weist eine Aufnahme 23 zum Einspannen des Fräsers 1 auf. Parallel zur Drehachse ist ein Plexiglasschutz 25 angebracht. Das Werkzeug weist einen Griff 21 mit einer Betätigungseinheit 22 auf. Oberhalb des Griffes befindet sich der Kopf 24, zu dem im rechten Winkel die Aufnahme 23 zum Einspannen des Fräsers 1 angeordnet ist.

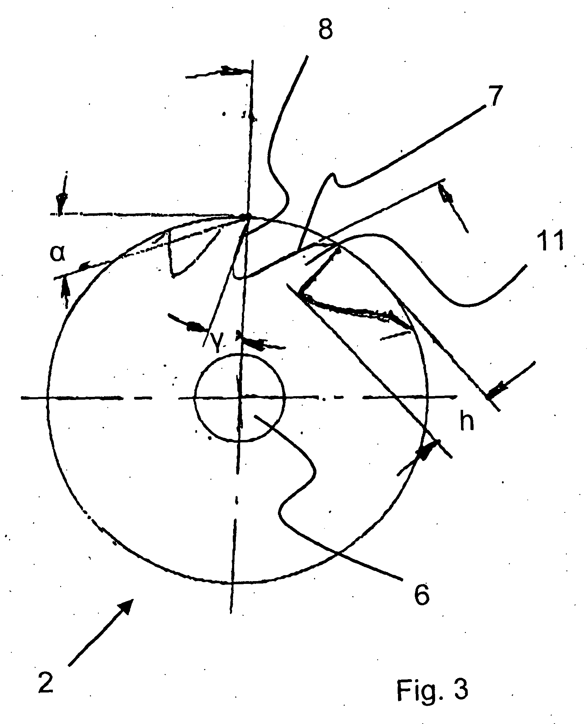

Fig. 3 zeigt eine Skizze eines erfindungsgemäßen Schneidrads 2. Das Schneidrad 2 besteht aus Vollhartmetall und hat einen Außendurchmesser von 25 mm. Zum Zentrieren und Aufspannen auf einem Dorn (nicht zu sehen) ist eine Bohrung 6 mit einem Durchmesser von 8 mm vorgesehen. Die 40 Zähne 11 des Schneidrades 2 haben einen Spanwinkel γ von 8°. Die Schneiden sind mit einem Freiwinkel α von 12° hinterschnitten. Das Schneidrad 2 hat eine Breite von 4 mm. Die vorderen Flanken 8 der Zähne haben einen Höhe h von 9 mm. Die hintere Flanke 7 und vordere Flanke 8 des folgenden Zahnes stehen in einem Winkel von 55° zueinander.

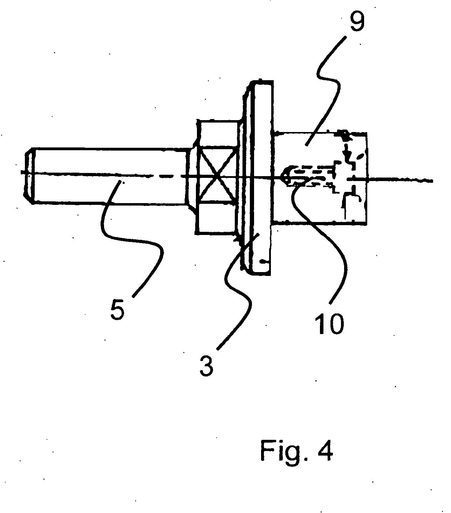

Fig. 4 zeigt eine Skizze von einer Aufnahme eines erfindungsgemäßen Fräsers. Die einstückige Aufnahme besteht aus Dorn 5 zum Einspannen in eine Werkzeugaufnahme (nicht zu sehen), einer Distanzscheibe 3 mit einem Durchmesser von 23,4 mm und einem weiteren Dorn 10 zum Aufsetzen eines Schneidrads sowie einer weiteren Distanzscheibe (nicht zu sehen), die dann mit einer Schraube (nicht zu sehen), für die ein Gewinde 10 vorgesehen ist, fixiert werden kann.

## Patentansprüche

1. Fräswerkzeug (20) mit einem Fräser (1) zum Auftrennen von Laserschweißnähten an Karosserieblechen mit einem Haltegriff (21) und einer Betätigungseinheit (22), wobei der Fräser (1) mit einem Dorn (5) in einer Aufnahme (23) befestigbar ist und ein Schneidrad (2) umfasst, wobei auf zumindest einer Seite des Schneidrads zumindest eine Distanzscheibe (3a,3b) angeordnet ist, die einen kleineren Radius als der materialabtragende Teil des Schneidrads (2) aufweist, wobei die zumindest eine Distanzscheibe (3a) mit dem Dorn (5) zum Einspannen in die Aufnahme (23) fest verbunden ist und das Schneidrad eine Breite von 1 bis 10 mm aufweist.

2. Fräswerkzeug (20) nach Anspruch 1, **dadurch gekennzeichnet, dass** das Schneidrad (2) im wesentlichen kreiszylinderförmig ausgestaltet ist.

3. Fräswerkzeug (20) nach einem der vorstehenden Ansprüche, **dadurch gekennzeichnet, dass** das Schneidrad (2) umfangseitig Schneiden aufweist.

4. Fräswerkzeug (20) nach einem der vorstehenden Ansprüche, **dadurch gekennzeichnet, dass** die Distanzscheibe (3a,3b) achsensymetrisch angeordnet ist.

5. Fräswerkzeug (20) nach einem der vorstehenden Ansprüche, **dadurch gekennzeichnet, dass** auf beiden Seiten des Schneidrads (2) eine Distanzscheibe (3a,3b) angeordnet ist.

6. Fräswerkzeug (20) nach einem der vorstehenden Ansprüche, **dadurch gekennzeichnet, dass** das Schneidrad (2) und/oder die Distanzscheiben (3a, 3b) austauschbar sind.

7. Fräswerkzeug (20) nach einem der vorstehenden Ansprüche, **dadurch gekennzeichnet, dass** der Fräser einen Dorn (5) zum Einspannen in eine Werkzeugaufnahme (23) aufweist.

8. Fräswerkzeug (20) nach Anspruch 7, **dadurch gekennzeichnet, dass** an dem Dorn (5) zum Einspannen in eine Werkzeugaufnahme (23) das Schneidrad (2) und die Distanzscheiben (3a,3b) befestigbar sind.

9. Fräswerkzeug (20) nach Anspruch 7, **dadurch gekennzeichnet, dass** zumindest eine Distanzscheibe (3a) mit dem Dorn (5) zum Einspannen in eine Werkzeugaufnahme (23) einstückig ausgebildet ist.

10. Fräswerkzeug (20) nach einem der vorstehenden Ansprüche, **dadurch gekennzeichnet, dass** die Schneiden des Schneidrads (2) einen Spanwinkel (γ) zwischen 3 und 15°, bevorzugt zwischen 5 und 10°, besonders bevorzugt zwischen 6 und 8° aufweisen.

11. Fräswerkzeug (20) nach einem der vorstehenden Ansprüche, **dadurch gekennzeichnet, dass** die Schneiden des Schneidrads hinterschnitten sind.

12. Fräswerkzeug (20) nach Anspruch 11, **dadurch gekennzeichnet, dass** der Freiwinkel (α) zwischen 1 und 30°, bevorzugt zwischen 8 und 15, besonders bevorzugt zwischen 10 und 12° beträgt.

13. Fräswerkzeug (20) nach einem der vorstehenden Ansprüche, **dadurch gekennzeichnet, dass** das Schneidrad einen Außendurchmesser zwischen 10 und 120 mm, bevorzugt zwischen 15 und 70 mm, besonders bevorzugt zwischen 20 und 50 mm aufweist.

14. Fräswerkzeug (20) nach einem der vorstehenden Ansprüche, **dadurch gekennzeichnet, dass** das Schneidrad 25 bis 60 Zähne (11), bevorzugt 40 bis 55 Zähne aufweist.

15. Fräswerkzeug (20) nach einem der vorstehenden Ansprüche, **dadurch gekennzeichnet, dass** das Schneidrad eine Breite von 3 bis 6 mm aufweist.

16. Fräswerkzeug (20) nach einem der vorstehenden Ansprüche, **dadurch gekennzeichnet, dass** das Schneidrad aus Vollhartmetall ausgebildet ist.

17. Fräswerkzeug (20) nach einem der vorstehenden Ansprüche, **dadurch gekennzeichnet, dass** die Distanzscheiben einen 0,1 bis 3 mm, bevorzugt 0,8 bis 1,2 mm, besonders bevorzugt 1,2, bis 1,7 mm kleineren Radius als das Schneidrad haben.

18. Fräswerkzeug nach einem der vorstehenden Ansprüche, **dadurch gekennzeichnet, dass** das Fräswerkzeug im wesentlichen parallel zur Fräserachse einen Schutz (25) gegen umherfliegenden Späne aufweist.

19. Fräswerkzeug nach Anspruch 18, **dadurch gekennzeichnet, dass** der Schutz (25) sich im wesentlichen kreisbogenförmig um die Fräserachse erstreckt.

20. Fräswerkzeug nach Anspruch 19, **dadurch gekennzeichnet, dass** der Schutz (25) im wesentlichen aus transparentem Material, insbesondere aus Plexiglas ausgebildet ist.

21. Fräswerkzeug nach einem der vorstehenden Ansprüche, **dadurch gekennzeichnet, dass** die Drehachse der Aufnahme in etwa rechtwinklig zum Haltegriff angeordnet ist.

22. Verfahren zum Auftrennen von Schweißnähten, insbesondere von Laserschweißnähten an Karosserieblechen, **dadurch gekennzeichnet, dass** die Schweißnaht bis auf eine Tiefe, die in etwa dem oberen Blech entspricht, abgetragen wird.

23. Verfahren nach dem Anspruch 22 **dadurch gekennzeichnet, dass** das Material durch Umfangsfräsen oder Schleifen abgetragen wird.

24. Verfahren nach einem der Ansprüche 22 oder 23, **dadurch gekennzeichnet, dass** zumindest eine Distanzscheibe achsensymetrisch angeordnet wird, die im Verhältnis zum materialabtragenden Teil des Werkzeugs einen Radius hat, der in etwa um die Dicke des oberen zu trennenden Bleches kleiner ist,

## Claims

1. Milling tool (20) having a milling cutter (1) for opening up laser weld seams on automobile body sheets having a handle (21) and an actuating unit (22), wherein the milling cutter (1) can be attached to a mandrel (5) in a receiver (23) and comprises a cutting wheel (2), wherein on at least one side of the cutting wheel at least one spacing disc (3a, 3b) is disposed which has a smaller radius than the material-removing part of the cutting wheel (2), wherein the at least one spacing disc (3a) is fixedly connected to the mandrel (5) in order to be clamped into the receiver (23) and the cutting wheel has a width of 1 to 10mm.

2. Milling tool (20) as claimed in claim 1, **characterised in that** the cutting wheel (2) is essentially formed as a circular cylinder.

3. Milling tool (20) as claimed in any one of the preceding claims, **characterised in that** the cutting wheel (2) has cutting edges on the periphery.

4. Milling tool (20) as claimed in any one of the preceding claims, **characterised in that** the spacing disc (3a, 3b) is disposed in an axially symmetrical manner.

5. Milling tool (20) as claimed in any one of the preceding claims, **characterised in that** a spacing disc (3a, 3b) is disposed on both sides of the cutting wheel (2).

6. Milling tool (20) as claimed in any one of the preceding claims, **characterised in that** the cutting wheel (2) and/or the spacing discs (3 a, 3b) can be changed.

7. Milling tool (20) as claimed in any one of the preceding claims, **characterised in that** the milling cutter has a mandrel (5) for clamping into a tool receiver (23).

8. Milling tool (20) as claimed in claim 7, **characterised in that** the cutting wheel (2) and the spacing discs (3a, 3b) can be attached to the mandrel (5) in order to be clamped into a tool receiver (23).

9. Milling tool (20) as claimed in claim 7, **characterised in that** at least one spacing disc (3a) is formed as one piece with the mandrel (5) in order to be clamped into a tool receiver (23).

10. Milling tool (20) as claimed in any one of the preceding claims, **characterised in that** the cutting edges of the cutting wheel (2) form a cutting angle (γ) between 3 and 15°, preferably between 5 and 10°, particularly preferably between 6 and 8°.

11. Milling tool (20) as claimed in any one of the preceding claims, **characterised in that** the cutting edges of the cutting wheel are undercut.

12. Milling tool (20) as claimed in claim 11, **characterised in that** the clearance angle (α) is between 1 and 30°, preferably between 8 and 15°, particularly preferably between 10 and 12°.

13. Milling tool (20) as claimed in any one of the preceding claims, **characterised in that** the cutting wheel has an outer diameter between 10 and 120mm, preferably between 15 and 70mm, particularly preferably between 20 and 50mm.

14. Milling tool (20) as claimed in any one of the preceding claims, **characterised in that** the cutting wheel has 25 to 60 teeth (11), preferably 40 to 55 teeth.

15. Milling tool (20) as claimed in any one of the preceding claims, **characterised in that** the cutting wheel has a width of 3 to 6mm.

16. Milling tool (20) as claimed in any one of the preceding claims, **characterised in that** the cutting wheel is formed from solid hard metal.

17. Milling tool (20) as claimed in any one of the preceding claims, **characterised in that** the spacing discs have a radius which is 0.1 to 3mm, preferably 0.8 to 1.2mm, particularly preferably 1.2 to 1.7mm smaller than the cutting wheel.

18. Milling tool as claimed in any one of the preceding claims, **characterised in that** the milling tool has a guard (25) to protect against flying chips which is essentially in parallel with the milling cutter axis.

19. Milling tool as claimed in claim 18, **characterised in that** the guard (25) extends essentially in a circular arc around the milling cutter axis.

20. Milling tool as claimed in claim 19, **characterised in that** the guard (25) is formed essentially from transparent material, in particular from Plexiglas.

21. Milling tool as claimed in any one of the preceding claims, **characterised in that** the axis of rotation of the receiver is disposed approximately at a right angle to the handle.

22. Method for opening up weld seams, in particular laser weld seams, on automobile body sheets, **characterised in that** the weld seam is removed to a depth which corresponds approximately to the upper sheet.

23. Method as claimed in claim 22, **characterised in that** the material is removed by peripheral milling or grinding.

24. Method as claimed in any one of claims 22 or 23, **characterised in that** at least one spacing disc is disposed in an axially symmetrical manner and has a radius in relation to the material-removing part of the tool, which is smaller by approximately the thickness of the upper sheet to be separated.

## Revendications

1. Outil de fraisage (20) avec une fraise (1), destiné à ouvrir des cordons de soudure au laser sur des tôles de carrosserie, avec une poignée de maintien (21) et une unité de commande (22), la fraise (1) pouvant être fixée au moyen d'une broche (5) dans un mandrin (23) et comprenant une roue de découpe (2), dans lequel est disposé sur au moins un côté de la roue de découpe au moins un disque de butée (3a, 3b) qui présente un rayon inférieur à celui de la partie de la roue de découpe (2) qui enlève la matière et dans lequel ledit au moins un disque de butée (3a) est solidaire de la broche (5) destinée à être serrée dans le mandrin (23) et la roue de découpe présente une largeur de 1 à 10 mm.

2. Outil de fraisage (20) selon la revendication 1, **caractérisé en ce que** la roue de découpe (2) est réalisée essentiellement sous la forme d'un cylindre circulaire.

3. Outil de fraisage (20) selon l'une des revendications précédentes, **caractérisé en ce que** la roue de découpe (2) présente des arêtes sur sa périphérie.

4. Outil de fraisage (20) selon l'une des revendications précédentes, **caractérisé en ce que** le disque de butée (3a, 3b) est monté en symétrie axiale.

5. Outil de fraisage (20) selon l'une des revendications précédentes, **caractérisé en ce qu'**un disque de butée (3a, 3b) est monté sur chacun des côtés de la roue de découpe (2).

6. Outil de fraisage (20) selon l'une des revendications précédentes, **caractérisé en ce que** la roue de découpe (2) et/ou les disques de butée (3a, 3b) peuvent être remplacés.

7. Outil de fraisage (20) selon l'une des revendications précédentes, **caractérisé en ce que** la fraise comporte une broche (5) destinée à être serrée dans un mandrin porte-outil (23).

8. Outil de fraisage (20) selon la revendication 7, **caractérisé en ce que** la roue de découpe (2) et les disques de butée (3a, 3b) peuvent être fixés sur la broche (5) destinée à être serrée dans un mandrin porte-outil (23).

9. Outil de fraisage (20) selon la revendication 7, **caractérisé en ce qu'**au moins un disque de butée (3a) est formé d'une seule pièce avec la broche (5) destinée à être serrée dans un mandrin porte-outil (23).

10. Outil de fraisage (20) selon l'une des revendications précédentes, **caractérisé en ce que** les arêtes de la roue de découpe (2) présentent un angle de coupe (γ) compris entre 3 et 15 °, de préférence entre 5 et 10 ° et plus préférentiellement compris entre 6 et 8 °.

11. Outil de fraisage (20) selon l'une des revendications précédentes, **caractérisé en ce que** les arêtes de la roue de découpe possèdent une contre-dépouille.

12. Outil de fraisage (20) selon la revendication 11, **caractérisé en ce que** l'angle de dépouille (α) est compris entre 1 et 30 °, de préférence entre 8 et 15 ° et plus préférentiellement entre 10 et 12 °.

13. Outil de fraisage (20) selon l'une des revendications précédentes, **caractérisé en ce que** la roue de découpe présente un diamètre extérieur compris entre 10 et 120 mm, de préférence entre 15 et 70 mm et plus préférentiellement entre 20 et 50 mm.

14. Outil de fraisage (20) selon l'une des revendications précédentes, **caractérisé en ce que** la roue de découpe possède entre 25 et 60 dents (11), de préférence entre 40 et 55 dents.

15. Outil de fraisage (20) selon l'une des revendications précédentes, **caractérisé en ce que** la roue de découpe possède une largeur de 3 à 6 mm.

16. Outil de fraisage (20) selon l'une des revendications précédentes, **caractérisé en ce que** la roue de découpe est fabriquée sous la forme d'une pièce intégralement en métal dur.

17. Outil de fraisage (20) selon l'une des revendications précédentes, **caractérisé en ce que** les disques de butée possèdent par rapport à la roue de découpe un rayon réduit de 0,1 à 3 mm, de préférence de 0,8 à 1,2 mm, plus préférentiellement de 1,2 à 1,7 mm.

18. Outil de fraisage (20) selon l'une des revendications précédentes, **caractérisé en ce que** l'outil de fraisage possède, de manière sensiblement parallèle à l'axe de la fraise, une protection (25) contre les projections de copeaux.

19. Outil de fraisage (20) selon la revendication 18, **caractérisé en ce que** la protection (25) s'étend sensiblement sous la forme d'un arc de cercle autour de l'axe de la fraise.

20. Outil de fraisage (20) selon la revendication 19, **caractérisé en ce que** la protection est constituée pour l'essentiel de matériau transparent, en particulier de plexiglas.

21. Outil de fraisage (20) selon l'une des revendications précédentes, **caractérisé en ce que** l'axe de rotation du mandrin est sensiblement perpendiculaire à la poignée de maintien.

22. Procédé d'ouverture de cordons de soudure, en particulier de cordons de soudure au laser sur des tôles de carrosserie, **caractérisé en ce que** le cordon de soudure est enlevé jusqu'à une profondeur qui correspond sensiblement à la tôle supérieure.

23. Procédé selon la revendication 22, **caractérisé en ce que** la matière est enlevée par fraisage tangentiel ou par meulage.

24. Procédé selon l'une des revendications 22 ou 23, **caractérisé en ce qu'**au moins un disque de butée est monté en symétrie axiale et possède par rapport à la partie de l'outil enlevant la matière un rayon qui est réduit d'environ l'épaisseur de la tôle supérieure à découper.
